# EUROPEAN PATENT APPLICATION

(11) **EP 1 780 053 A1**
(43) Date of publication of application: **02.05.2007**
(21) Application number: 06022741.0
(22) Date of filing: 31.10.2006
(51) Int. Cl.: B60C 13/00

(54) **Light emitting device for tire sidewall and tire equipped with the light emitting device**

(30) Priority: 31.10.2005 KR 20050103378
(71) Applicant: Kumho Tire Co., Inc., Gwangsan-gu Gwangju 506-711 (KR)
(72) Inventor: Song, Han-Seao, Gwansan-gu, Gwangju 506-752 (KR); Jung, II-Taik, Gwansan-gu, Gwangju 506-302 (KR); Choi, Seok-Ju, Gwansan-gu, Gwangju 506-769 (KR); Lee, Heung-Goo, Gyeonggi-Do, 450-060 (KR); Min, Ho, Damyang-gun, Jeollanam-Do, 517-805 (KR)
(74) Representative: Wächter, Jochen

(57) **Abstract**

Disclosed herein is a light emitting device (11) for a tire, comprising: a light emitting pattern forming unit (1) attached on a predetermined position of a tire sidewall, having at least one light emitting device (11) in a regular array; a light emitting control unit for controlling on/off of each light emitting device in accordance with a predetermined light emitting pattern by a regular period; and a power supply unit for supplying a power to the light emitting control unit and the light emitting device.

## Description

### BACKGROUND OF THE INVENTION

### 1. Field of the Invention

The present invention relates, generally, to light emitting devices for tire sidewalls and tires equipped with the light emitting devices, more particularly, to a light emitting device for tire sidewalls capable of maximizing visual effects by enlightening a specified letter or logo at the exposed portions of a tire when driving a car especially at night and capable of producing a highly valued tire which can display a specified letter or logo selected by a user and a tire equipped with the light emitting device.

### 2. Description of the Related Art

Recently, a visual point is considered important in tires as well as a functional excellence. The contents regarding a self-generating light emitting advertisement plate attached on the wheels as a method for improving visual effects is disclosed in Korean Patent Application No. 2003-8758. According to the method, an advertisement plate is attached on wheels of a vehicle to be applied in the shape of wheelcap and to show visual effects due to idles of the advertisement plate in the shape of wheelcap using a bearing when the wheels are driven. In addition, the advertisement plate is made of a transparent synthetic resin to bury a light emitting device LED on the surface so that the advertisements are well shown at night. However, the present invention is disadvantageous in that weighty additional advertisement plates should be attached on the wheels in order to have visual effects and careful treatment is required because a plurality of light emitting devices are used. Furthermore, large power consumption is inevitable, resulting in increasing the volume of a generator which supplies power.

### SUMMARY OF THE INVENTION

Accordingly, the present invention has been made keeping in mind the above problems occurring in the related art, and an object of the present invention is to provide a light emitting device for tire sidewalls capable of maximizing visual effects by enlightening a specified letter or logo at the exposed portions of a tire when driving a car especially at night and capable of producing a highly valued tire which can display a specified letter or logo selected by a user and a tire equipped with the light emitting device.

Another object of the present invention is to provide a light emitting device for a tire sidewall, comprising: a light emitting pattern forming unit attached on a predetermined position of a tire sidewall, having at least one light emitting device in a regular array; a light emitting control unit for controlling on/off of each light emitting device in accordance with a predetermined light emitting pattern by a regular period; and a power supply unit for supplying a power to the light emitting control unit and the light emitting device.

A further object of the present invention is to provide a tire equipped with a light emitting device, comprising: a light emitting pattern forming unit attached on a predetermined position of a tire sidewall, having at least one light emitting device in a regular array; a light emitting control unit for controlling on/off of each light emitting device in accordance with a predetermined light emitting pattern by a regular period; and a power supply unit for supplying a power to the light emitting control unit and the light emitting device.

### BRIEF DESCRIPTION OF THE DRAWINGS

The above and other objects, features and advantages of the present invention will be more clearly understood from the following detailed description taken in conjunction with the accompanying drawings, in which:
FIG. 1 shows an embodiment of a light emitting pattern forming unit suggested as a preferred embodiment of the present invention;
FIG. 2 is an entire configurational view of a light emitting device suggested as a preferred embodiment of the present invention;
FIG. 3 is a light emitting pattern view of a light emitting diode according to rotations of a tire sidewall as a preferred embodiment of the present invention ((a)the first light emitting position for showing a predetermined letter, (b)the middle position and (c)the last position);
FIG. 4 is a procedural view showing an operational process of a light emitting device according to the present invention;
FIG. 5 is an enforcement view of the state having a tire wheel and a side wall on the light emitting device according to the present invention; and
FIG. 6 is an exemplary view displaying the state driving a car having a light emitting pattern forming unit on a tire sidewall.

### DESCRIPTION OF THE PREFERRED EMBODIMENTS

Hereinafter, embodiments of the present invention will be described in detail with reference to the attached drawings.

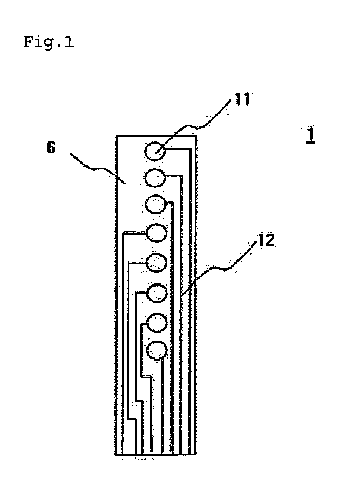

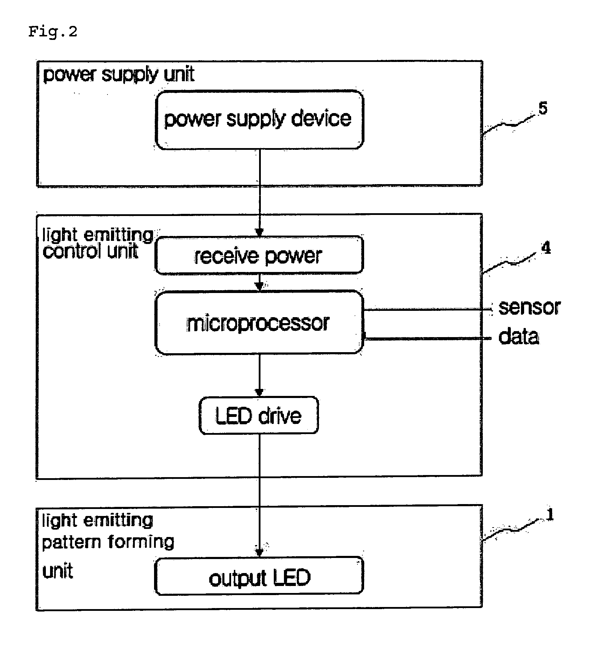

FIG. 1 shows an embodiment of a light emitting pattern forming unit (1) suggested as a preferred embodiment of the present invention. The light emitting pattern forming unit (1) consists of a light emitting device (11) and a substrate (6) on which the light emitting device (11) and a strip line (12) for electrically connecting the light emitting device (11) and the light emitting control unit are formed. The light emitting device is not limited only if it generates a light by supplying a current, for example a light emitting diode LED can be used. The light emitting diode LED is a device for changing an electric signal into a light emitting signal in accordance with the electric signal applied from a light emitting control unit (Signal 4 of Fig. 2) which will be described.

Preferably, the light emitting device (11) has a plurality of devices arranged in a line or in a plurality of lines on a substrate (6). An example of an arrangement of a light emitting device (11) in a light emitting pattern forming unit (1) is shown in Fig. 1. The light emitting device is arranged at a predetermined place in a line, each device turning on/off in accordance with a predetermined electric signal applied from the light emitting control unit. For each device, the turning on/off for emitting a light is performed by a predetermined period and the light emitting signals create an afterimage effect to be displayed as a predetermined letter or a logo by those who look at from the outside.

The substrate (6) is made of a ductile material such as polyimide, having a copperfoil strip line (12) in the inside and input/output ports at its ends. The substrate (6) provides with a path for transmitting an electric signal output from the light emitting control unit to the light emitting device (11) attached on the end.

The light emitting pattern forming unit (1) of the above configuration is positioned on the tire sidewall and then coated with epoxy etc. to be completely attached or is fixed safely at a regular groove formed at the tire sidewall.

Fig. 2 is an entire system configurational view of a light emitting device suggested as a preferred embodiment of the present invention and includes a light emitting pattern forming unit (1), a light emitting control unit (4) and a power supply unit (5). The power supply unit (5) supplies power to the light emitting control unit (4) and the light emitting control unit (4) includes a power receiver, a microprocessor (MICOM) and an LED driver.

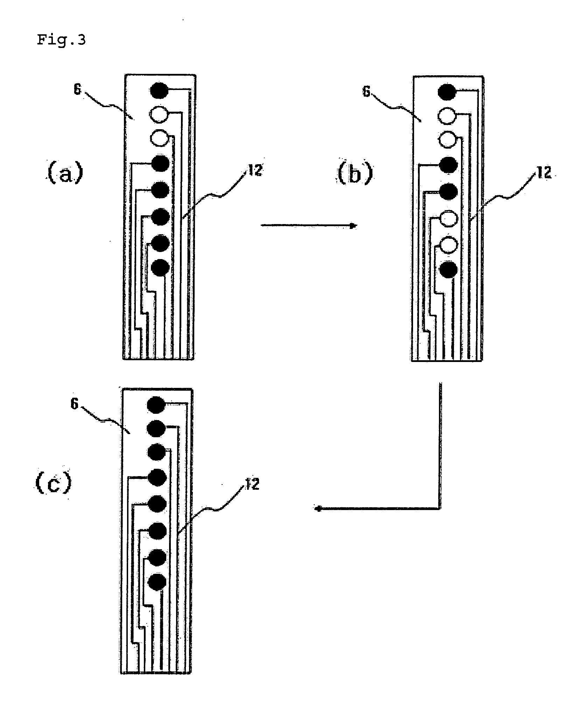

A process to be displayed as a letter or a logo now will be described in detail with reference to Fig. 3. Fig. 3(a) to (c) shows each state of the first, the middle and the last of a light emitting pattern for forming one letter or logo. This represents the state of a light emitting pattern forming unit (1) within a concerned angle in accordance with 360°/n rotations of a tire. For example, the position of the signal (a) is repeated by one rotation period of a tire and the one rotation period of the tire rotates 17 turns for one second per 1000PRM if a gear ratio is 1:1. Therefore, it is possible to obtain an adequate time period of 1/16seconds required for performing an afterimage effect efficiently. A specified light emitting pattern of a light emitting device at a concerned position remains an afterimage for one rotation period of a tire to be displayed. Likewise, the afterimage remains at the middle step (b) and the last step (c) also after a period time passes so that a specified letter is displayed at every 360°/n rotations of a tire. At this time, n is a positive number which is set in accordance with the size of the letter to be shown. For example, in case that the letter to be displayed is shown within a central angel of 30 °/n rotations, n is 12.

The light emitting control unit (4) includes a power receiver, a MICOM and a LED drive. A digital signal treated in the MICOM operates a drive to drive a light emitting device and the digital signal includes an operational signal for exactly displaying a light emitting pattern in accordance with the positions in a tire of a light emitting pattern forming unit (1). In order to control the operational signals, a sensor may be used. If a sensor is used, the positions where a letter or a logo in a tire is displayed can be fixed more exactly. It is possible to adjust more exactly the positions where to display by controlling a light emitting timing, if required. Accordingly, it is possible to select and fix the positions where to display to an upper portion, a lower portion or a side portion of a tire sidewall. A sensor may apply a detected signal to the light emitting control unit (4) so that the light emitting pattern forming unit (1) reaches a regular position in a circle from a tire tread unit and a point of contacting an earth surface or emits a light a regular time after a specified portion of a tire tread reaches an earth surface in consideration of a rotational velocity of a wheel. For example, in case that the light emitting pattern forming unit (1) is attached on sides of the tire sidewall (3), a sensor for detecting positions of the light emitting pattern forming unit (1) is attached at a predetermined position of a car or a piezo-electric sensor is put on a tire tread unit to apply a signal to a light emitting control unit so that the first light emitting signal, for example a determined pattern is displayed at the position of Fig. 3(a) at a regular time (or a regular position) after the piezo-electric sensor reaches the earth surface. Likewise, the light emitting control unit receives a signal from a sensor and controls the light emitting pattern forming unit (1) so that a light emitting signal with specific patterns (light emitting signal at the positions (b) and (c)) with an interval of a regular time from the position of (a) since a regular time. As described above, the first light emitting position represented as (a) can be adjusted into another position of a tire sidewall by controlling the timing.

The light emitting device according to the present invention can be managed in a database with a predetermined file type so that various letters or logos designated by a user are displayed. Preferably, the data can be stored and managed in a storing device in MICOM and a designated letter or a logo can be selected and displayed by a user. This designation behavior can be carried out through input/output terminals of MICOM via additional input devices capable of being attached inside a car. It would rather that a user directly inputs letters to be display to the input devices, if required.

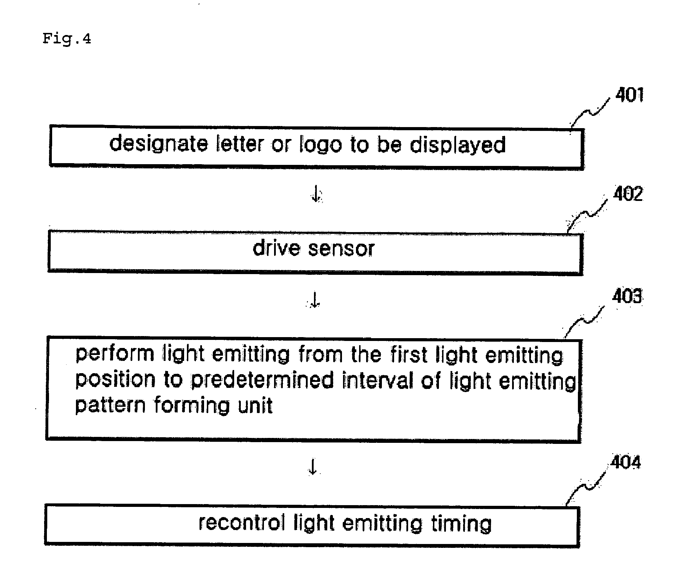

Fig. 4 is a procedural view showing an operational process of a light emitting device according to the present invention. In the step 401, a driver turns on and designates a letter or a logo to be displayed. This is carried out using an additional input terminal prepared close to the driver. If the behavior for designating a letter or a logo to be displayed is completed by a user, the MICOM drives a sensor in the step 402. For example, in case of a piezo-electric sensor, a predetermined electric signal is applied through an input terminal of MICOM at a point where a tire tread unit contacts an earth surface and MICOM receives information of current rotational velocity of a wheel from a sensor and controls a light emitting timing in accordance with the velocity to perform a light emitting with a predetermined pattern from the first position of emitting a light in the light emitting pattern forming unit to a predetermined interval. In the step 404, in case that the current velocity of a wheel is changed over a certain value, the timing of emitting a light is controlled again and a light emitting is performed from the first position of emitting a light in the light emitting pattern forming unit to a predetermined interval with a predetermined pattern.

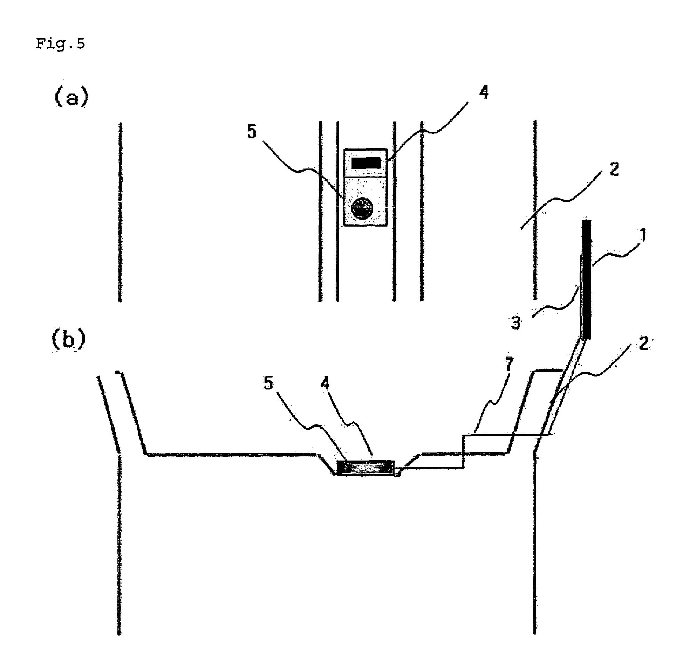

Another power supply unit (5) is provided to the light emitting control unit (4) for the purpose of supplying a power. The power supply unit (5) inserts a nickel cadmium batter inside the wheel (2) or may be a generator capable of changing a rotational energy into an electric energy. It is preferable that the power supply unit (5) be provided with a device capable of playing a role in carrying out power receiving and transmitting so that a driver turns on and out. The power supply unit (5) and the light emitting pattern forming unit (1) are connected by a plate type wire with the thickness less than 0.3mm, a rubber with the thickness of 1.25sq or a wire (6) coated with a material such as silicon asbestos or nickel asbestos. As shown in Fig. 5, the wire is exposed to the outside of the power supply unit (5) to be connected to the light emitting pattern forming unit (1).

FIG. 5 is an enforcement view of the state having a tire wheel and a side wall on the light emitting device according to the present invention. The light emitting pattern forming unit (1) is inserted or attached/fixed on tire sidewalls (3) and the light emitting control unit (4) and the power supply unit (5) arrive at an upper groove of each tire wheel (2). In addition, the light emitting control unit (4) and the light emitting patter forming unit (1) are interconnected by wires in general, but wireless interconnecting them would make no difference. It is possible to fix the position of the light emitting control unit (4) and the power supply unit (5) to the position which is different from the light emitting pattern forming unit (1) of sidewalls instead of wheels.

The present invention provides with an entire or some of constitutional components configuring the light emitting device. The minimum constitutional components required for such tire is a light emitting pattern forming unit (1) attached on tire sidewalls (3); a light emitting control unit (4) for controlling on/off of the light emitting device (11) attached on the light emitting pattern forming unit (1); and a power supply unit (5) for supplying a power to the light emitting control unit (4) and the light emitting device (11).

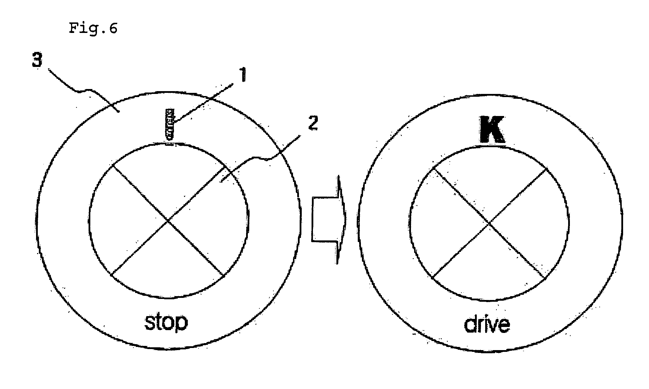

FIG. 6 shows a process for displaying a letter at the state of driving a car having a light emitting device on the tire sidewalls. According to the present invention, in spite that the tire sidewall (3) is rotated, the state where the letter designated by a driver displays the letter "K" from an afterimage due to a light emitting pattern of a light emitting pattern forming unit (1) at the first position. A light emitting tire according to the present invention can display a letter with a very excellent visuality and display a desired letter in accordance with the taste of a user, therefore it is expected to embrace a wide range of users.

According to the present invention, it is possible to enlighten a specified letter or a logo at the exposed portions of a tire when driving a car especially at night to maximize the visual effects and display a specified letter or logo selected by a user therefore, a highly valued tire can be produced.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A light emitting device for a tire, comprising:
a light emitting pattern forming unit attached on a predetermined position of a tire sidewall, having at least one light emitting device in a regular array;
a light emitting control unit for controlling on/off of each light emitting device in accordance with a predetermined light emitting pattern by a regular period; and
a power supply unit for supplying a power to the light emitting control unit and the light emitting device.

2. The device of claim 1, further comprising: a sensor section for selecting the first light emitting position.

3. The device of claim 1, further comprising: an input device for selecting a letter or a logo to be displayed.

4. The device of claim 1, further comprising: an input device for directly inputting a letter to be displayed.

5. The device of claim 3, wherein the input device has further comprise a position selecting section capable of determining positions for displaying a letter or a logo to be displayed.

6. The device of claim 1, wherein the light emitting device is a LED.

7. A tire equipped with a light emitting device, comprising: a light emitting pattern forming unit attached on a predetermined position of a tire sidewall, having at least one light emitting device in a regular array;
a light emitting control unit for controlling on/off of each light emitting device in accordance with a predetermined light emitting pattern by a regular period; and
a power supply unit for supplying a power to the light emitting control unit and the light emitting device.
